## Europäisches Patentamt

## European Patent Office

## Office européen des brevets

(11) Veröffentlichungsnummer: **0 282 454**
**A2**

# (12) EUROPÄISCHE PATENTANMELDUNG

(21) Anmeldenummer: **88810135.9**

(51) Int. Cl.⁴: **B 23 Q 5/26**

(22) Anmeldetag: **04.03.88**

(30) Priorität: **10.03.87 CH 887/87   30.04.87 CH 1648/87
02.07.87 CH 2520/87**

(43) Veröffentlichungstag der Anmeldung:
**14.09.88   Patentblatt   88/37**

(84) Benannte Vertragsstaaten:
**CH DE FR GB IT LI SE**

(71) Anmelder: **C.A. Weidmüller GmbH & Co.
Klingenbergstrasse 16
D-4930 Detmold  (DE)**

(72) Erfinder: **Vornfett, Karl-Ulrich
Krippenhof 20
D-7570 Baden-Baden  (DE)**

**Schmall, Karl-Heinz
Waldstrasse 20
D-7570 Baden-Baden 19  (DE)**

(74) Vertreter: **Wenger, René et al
Hepp & Partner AG Marktgasse 18
CH-9500 Wil  (CH)**

(54) Vorrichtung zum Regeln der Relativlage zwischen einem Werkzeug und einem Werkstück.

(57) Das Stellglied (6) besteht aus wenigstens einem Druckmittelzylinder zwischen der Werkzeughalterung (2) und dem Werkzeug (1). Das Werkzeug (1) ist an der Werkzeughalterung (2) mit Hilfe von Führungsvorrichtungen (37) geführt. Die Distanz (h) zwischen dem Werkzeug (1) wird über einen Sensor (4) ermittelt, dessen Werte in einem Regler (5) ausgewertet werden. Bei kleinen Regelabweichungen werden die Stellglieder (6) betätigt, ohne dass eine Betätigung des trägen Hauptantriebs (11) erforderlich ist.

FIG.1

## Beschreibung

### Vorrichtung zum Regeln der Relativlage zwischen einem Werkzeug und einem Werkstück

Die Erfindung betrifft eine Vorrichtung zum Regeln der Relativlage zwischen einem Werkzeug und einem Werkstück gemäss dem Oberbegriff von Anspruch 1. Bei bestimmten Bearbeitungsvorgängen, wie beispielsweise beim automatisierten Schweissen oder Trennschneiden von Blechen, ist es erforderlich, dass beim Vorschieben des Werkzeuges ein präziser Abstand zwischen dem Schweiss- oder Schneidwerkzeug einerseits und dem Werkstück anderseits eingehalten wird. Das Stellglied zum Einhalten des richtigen Werkzeugabstandes muss dabei in der Lage sein, auch Auslenkungen mit stark unterschiedlicher Zeitkonstante auszuführen.

Ein Problem bei derartigen Vorrichtungen besteht darin, dass bei der Abstandsregelung an der Maschine, beispielsweise an einem Schweissroboter, grosse Massen bewegt werden müssen. Dadurch wird das Regelsystem träge und schnelle Werkzeugbewegungen sind nicht möglich. Aus diesem Grund wurde bereits vorgeschlagen, unmittelbar am Werkzeug kleine Elektromotoren anzuordnen, welche als Stellglieder für die Feinregelung des Werkzeugabstandes dienen, ohne dass die gesamte Werkzeughalterung bewegt werden muss. Ein Nachteil dieser Lösung besteht jedoch darin, dass die Elektromotoren zu viel Platz beanspruchen und nur begrenzte Beschleunigung des Werkzeuges zulassen, weil das Trägheitsmoment der Rotoren von Elektromotoren den grössten Anteil der Beschleunigungskräfte beansprucht.

Es ist daher eine Aufgabe der Erfindung, eine Vorrichtung der eingangs genannten Art zu schaffen, bei der auf platzsparende und einfache Weise eine Feinregulierung der Werkzeugposition mit hoher Verstellgeschwindigkeit möglich ist. Ausserdem soll die Störanfälligkeit vor allem bei Werkzeugen mit hoher Temperaturentwicklung gesenkt werden bzw. die Betriebssicherheit in dieser kritischen Region erhöht werden. Diese Aufgabe wird erfindungsgemäss mit einer Vorrichtung gelöst, welche die Merkmale im Anspruch 1 aufweist.

Die erfindungsgemässen Druckmittelantriebe erlauben eine Regelmechanik mit hoher Grenzfrequenz. Die Führungsvorrichtungen können separat angeordnet sein, so dass die Druckmittelantriebe nicht auch noch Führungsfunktionen übernehmen müssen. Diese Anordnung hat ferner den Vorteil, dass das Werkzeug verdrehsicher in der Werkzeughalterung gelagert ist. Eine besonders vorteilhafte Anordnung ergibt sich dabei, wenn um die Werkzeugmittelachse im gleichen Umfangsabstand zueinander wenigstens zwei Druckmittelzylinder angeordnet sind und wenn im Umfangsrichtung zwischen je zwei Druckmittelzylindern eine Führungsvorrichtung angeordnet ist. Mit dieser Anordnung wird eine gleichmässige Kräfteverteilung erreicht. Die Druckmittelzylinder und die Führungsvorrichtungen umgeben die Werkzeugmittelachse kreisförmig, so dass das Zentrum frei bleibt. Dies ist bei Laser-Bearbeitungswerkzeugen unabdingbar, da der auf das Werkstück zu fokussierende Laserstrahl nicht beliebig umgelenkt werden kann. Je nach Grösse des Werkzeuges können um die Mittelachse auch drei oder mehr Druckmittelzylinder mit jeweils dazwischenliegenden Führungsvorrichtungen angeordnet sein.

Für die erfindungsgemässe Vorrichtung ist es besonders vorteilhaft, wenn am Stellglied eine Wegmessvorrichtung angeordnet ist, mit der die Relativverschiebung zwischen Werkzeughalterung und Werkzeug messbar ist, und wenn ferner beim Erreichen oder bei Annäherung an den oberen oder unteren maximalen Kolbenhub ein Hauptantrieb zum Nachregeln der Werkzeughalterung aktivierbar ist. Auf diese Weise ist gewährleistet, dass das Stellglied immer einen optimalen Arbeitsbereich beibehält, indem bei Annäherung oder beim Erreichen des maximalen Kolbenhubes die gesamte Werkzeughalterung über den Hauptantrieb nachgeregelt wird und das Stellglied wieder in eine mittlere Arbeitsposition zurückgeführt werden kann. So verbleibt für die relativ träge Nachregelung durch den Hauptantrieb immer genügend Zeit, da rasch erforderliche Feinregulierungen durch das Stellglied zwischen Werkzeug und Werkzeughalterung vorgenommen werden.

Die Druckmittelzylinder können entweder mit einem beidseitig oder mit einem nur einseitig mit Druckmittel beaufschlagbaren Kolben versehen sein, wobei im letzteren Fall der Kolben mit einer Feder vorgespannt ist. Der nur einseitig beaufschlagbare Kolben mit Federvorspannung hat den Vorteil, dass einfachere Ventile für die Steuerung eingesetzt werden können. Bei entlastetem Kolben wird das Werkzeug durch die Federkraft jeweils wieder in eine Ausgangsposition zurückgestellt.

Als Führungsvorrichtungen eignen sich besonders vorteilhaft Kugelbüchsen, die eine hohe Präzision und eine geringe Reibung gewährleisten. Aber auch andere geeignete Lager wie z.B. Luftlager oder auch eine Kombination verschiedener Lager wären denkbar.

Besonders vorteilhaft sind die Druckmittelzylinder pneumatisch aktivierbar. Im Gegensatz zu hydraulisch aktivierbaren Druckmittelzylindern ergeben sich dabei nur geringe Abdichtungsprobleme. Bei Laser-Bearbeitungswerkzeugen können infolge der hohen Temperaturen auch thermische Probleme mit Hydraulik-Flüssigkeit auftreten. Diese Probleme ergeben sich mit Druckluft nicht. Das System kann an eine permanente Druckluftquelle im Betrieb angeschlossen werden, ohne dass zusätzliche Pumpen und dergleichen erforderlich sind. Ein weiterer Vorteil der pneumatischen Druckmittelzylinder besteht darin, dass Druckluft im Gegensatz zu Hydraulik-Flüssigkeit eine gewisse Kompressibilität aufweist. Stösst das Werkzeug beispielsweise auf ein Hindernis, so lässt es sich gegen den Druck im Zylinder doch noch geringfügig bewegen, wodurch möglicherweise Beschädigungen verhindert werden. Es wäre sogar denkbar, die Druckmittelzylinder mit einem Ueberdruckventil zu verbinden, welche im Falle einer Havarie bzw. beim Ueberschreiten eines zulässigen maximalen Druckes öffnen und das Werkzeug dadurch freigeben. Wenn jedem Pneumatikzylinder ein Dämpfungselement zugeordnet ist, lassen sich zu rasche Hubbewegungen auf einfachste Weise dämpfen.

Vorteile lassen sich aber auch mit einer Vorrichtung erzielen, welche die Merkmale im Anspruch 10 aufweist. Bei diesem Druckmittelantrieb, der durch die beiden ineinander schiebbaren Rohre gebildet wird, ist das Stellglied einerseits ausserordentlich platzsparend zwischen der Werkzeughalterung und dem Werkzeug untergebracht. Das Innenrohr erlaubt es sogar, dass ein Teil des Werkzeuges innerhalb des Innenrohres untergebracht werden kann. Die beiden ineinander geschobenen Rohre bilden aber nicht nur einen Druckmittelantrieb, sondern auch eine lineare Führungsvorrichtung für das Werkzeug.

Besonders vorteilhaft lässt sich der Druckmittelantrieb ansteuern, wenn der Hohlzylinderraum durch einen kreisringförmigen Abschnitt am Innenrohr in zwei Ringkammern unterteilt ist, welche beide mit Druckmittel beaufschlagbar sind. Auf diese Weise wird ein zweiseitig beaufschlagbarer Kolben gebildet, der sich über ein entsprechendes, proportional regelndes Druckmittelventil sehr exakt steuern lässt. Die Kolbenrückstellung erfolgt auf beide Seiten ausschliesslich durch Druckmedium.

Eine besonders vorteilhafte Lagerung des Innenrohres im Aussenrohr kann dadurch erreicht werden, dass im Hohlraum ein Wälzlager angeordnet ist, an dem das Aussenrohr und das Innenrohr gegeneinander abgestützt und gelagert ist. Das Wälzlager kann beispielsweise eine Kugelbüchse sein, so dass eine äusserst reibungsarme, präzise und robuste Lagerung gewährleistet ist. Der Hohlraum dient dadurch nicht nur als Druckmittelzylinder, sondern auch noch als Aufnahmeraum für die Wälzlager. Da das Druckmittel bei diesem Ausführungsbeispiel in der Regel eine Hydraulikflüssigkeit sein wird, wird das Wälzlager dauernd geschmiert, was seine Laufeigenschaften noch verbessert.

Ausführungsbeispiele der Erfindung sind in den Zeichnungen dargestellt und werden nachstehend genauer beschrieben. Es zeigen:

Figur 1 ein Stellglied mit separatem Sensor im Regelkreis in schematischer Darstellung,

Figur 2 ein abgewandeltes Stellglied mit integriertem Sensor in einem vereinfacht dargestellten Regelkreis,

Figur 3 einen Schnitt durch die Mittelachse einer erfindungsgemässen Vorrichtung in stark vereinfachter Darstellungsweise,

Figur 4 einen Querschnitt durch die Vorrichtung gemäss Figur 3,

Figur 5 einen Teilschnitt durch eine alternative Ausführungsform eines Druckmittelzylinders, und

Figur 6 einen Querschnitt durch ein weiteres Ausführungsbeispiel einer erfindungsgemässen Vorrichtung.

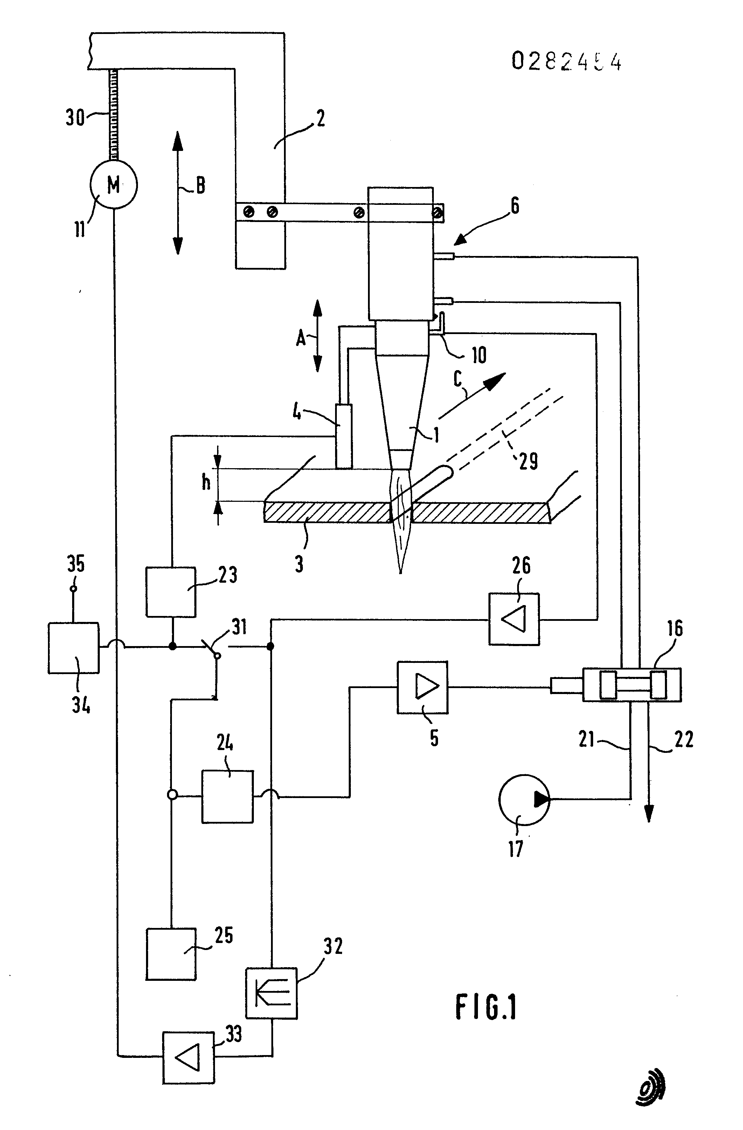

Figur 1 zeigt ein Werkzeug 1, das an einer Werkzeughalterung 2 befestigt ist, welche beispielsweise der Arm eines nicht näher dargestellten Roboters oder einer anderen automatischen Bearbeitungsanlage sein kann, der mehrere bewegliche Achsen ermöglicht, wie z.B. mit den Pfeilrichtungen B und C angedeu tet. Das Werkzeug 1 ist im vorliegenden Ausführungsbeispiel ein Laserschneidkopf, mit dessen Hilfe das Werkstück 3 in der Form eines Stahlblechs entlang der Trennlinie 29 getrennt werden soll. Zu diesem Zweck wird das Werkzeug 1 an der Werkzeughalterung 2 in Pfeilrichtung C vorgeschoben. Um eine optimale Trennleistung zu erzielen, soll ein bestimmter Abstand h zwischen Werkzeug 1 und Werkstück 3 möglichst exakt eingehalten werden.

Der Abstand h wird während des Vorschubes über einen Abstandssensor 4 dauernd ermittelt, der über einen Istwertverstärker 23 Signale an einen Vergleicher 24 abgibt. Der Abstandssensor 4 kann beim Schneidbrennen unmittelbar in die Düsenspitze integriert sein. Er ist jedoch hier als separates Bauteil gezeichnet, wie es z.B. beim Schweissen üblich ist. Der Vergleicher ist an einen Sollwertgeber 25 angeschlossen und meldet Abweichungen des Istabstandes h von Sollwert an einen Regler 5. Bei kleinen Regelabweichungen übermittelt der Regler 5 Stellsignale an ein Proportionalregelventil 16, mit dem das nachstehend beschriebene Stellglied 6 zwischen Werkzeughalterung 2 und Werkzeug 1 betätigt werden kann. Das Regelventil 16 verteilt den Hydraulikdruck der Druckleitung 21 aus einer Druckmittelquelle 17, so dass das Stellglied 6 in Richtung der Verkleinerung von Istwert- zu Sollwertdifferenz nachgeführt wird. Ueber die Rücklaufleitung 22 fliesst das Druckmittel vom Stellglied 6 wieder zurück in einen nicht näher dargestellten Druckmitteltank.

Durch die proportionale Beaufschlagung mit Druckmittel kann das Stellglied 6 das Werkzeug 1 in Pfeilrichtung A mit äusserst raschen Reaktionszeiten Verschieben, ohne dass dabei die Werkzeughalterung 2 über den Hauptantrieb 11 verschoben werden muss. Die Annäherung oder das Erreichen der maximalen Hubstellung des Stellgliedes 6 wird über die Wegmessvorrichtung 10 oder über geeignete Endschalter ermittelt und in einem Positions-Istwertverstärker 26 ausgewertet. Für alle Zwischenstellungen der Wegmessvorrichtung 10 gibt der Positions-Istwertverstärker 26 vorzugsweise analoge Zwischenwerte ab. Besonders vorteilhaft ist es, wenn in der Mitte des Verstellbereichs des Werkzeugs 1 der Positions-Istwertverstärker 26 den Wert Null anzeigt und wenn bei Abweichungen in beiden Richtungen positive bzw. negative Analogsignale abgegeben werden. Damit ist es möglich, bei Umlegen des Betriebsschalters 31 diese Positionswerte auf den Regelkreis 24/5 aufzuschalten, so dass das Werkzeug 1 sich auf den vom Sollwertgeber 25 vorgegebenen Einstellwert positioniert. Das Wegsignal aus dem Positions-Istwertverstärker 26 wird ausserdem einer bidirektionalen Schwellwertstufe 32 zugeführt, die bei Ueberschreitung der vorgegebenen Sollwerte der Stellung des Werkzeugs 1 über den Antriebsverstärker 33 den Hauptantrieb 11 der Werkzeughalterung 3 über die Spindel 30 so aktiviert, dass der Hauptantrieb 11 mit der Werkzeughalterung 3 so nachgeführt wird, dass das schnelle Stellglied 6 wieder in seine optimale Lage gelangt.

Der Betriebsschalter 31 hat die Aufgabe, dem Regelkreis 24/5 entweder den Abstands-Istwert oder den Stellungs-Istwert des Werkzeugs 1 zu melden. Diese Möglichkeit ist besonders dann vorteilhaft, wenn der Abstandssensor 4 für die optimale Programmierung der Werkzeugführung beispielsweise in einer mehrachsigen Roboteranlage dienen soll. In diesem Fall wird das Werkzeug 1 über die Wegmesseinrichtung 10 und den Regelkreis 24/5/16/6 in einer bestimmten Position gehalten und durch den Hauptantrieb 11 in den Richtungen B und C sowie in anderen, in Figur 1 nicht dargestellten Bewegungsachsen zum Werkstück hin bewegt, bis der Sollabstand für den späteren Arbeitsgang vom Abstandssensor 4 über den Istwertverstärker 23 gemeldet wird. Am Ausgang 35 der Vergleicherstufe 34 wird dann ein Schaltbefehl erzeugt, der den Bewegungsvorgang des Hauptantriebs 11 stillsetzt. Diese Möglichkeit erleichtert das Teach-in-Verfahren bei automatischen Bearbeitungseinrichtungen.

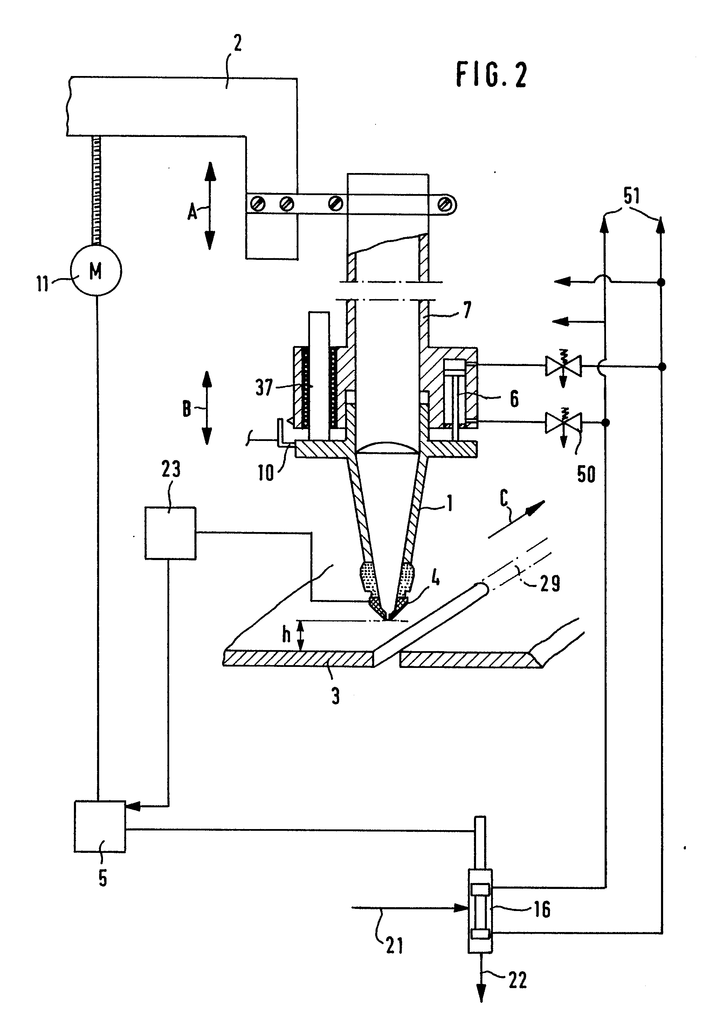

Beim Ausführungsbeispiel gemäss Figur 2 ist das Stellglied 6 etwas genauer dargestellt.

Der Abstandssensor 4 ist im vorliegenden Fall unmittelbar in die Düsenspitze des Laser-Schniedkopfes integriert. Bei Schweisswerkzeugen wäre eine kapazitive Abstandsmessung auf diesem Wege nicht möglich, da beim Schweissen eine leitende Plasma-Säule entsteht. Der Abstandssensor ist daher bei Schweisswerkzeugen neben der Düse als separates Bauteil angeordnet, wie in Figur 1 dargestellt.

Der Regler 5 vergleicht den gemessenen Istwert mit einem Sollwert und gibt bei Abweichungen Stellsignale entweder an das nachstehend noch beschriebene Stellglied 6 oder aber an den Hauptantrieb 11, der die Werkzeughalterung 2 in Pfeilrichtung A verschiebt.

Das Werkzeug 1 ist an der Werkzeughalterung 2 mit Hilfe der Führungsvorrichtungen 37 gelagert. Die Verknüpfung der Regelfunktionen zwischen Sensor 4 und Wegmessvorrichtung 10 ist ähnlich oder identisch wie bei Figur 1.

Bei mehreren Stellgliedern 6 sind diese jeweils vom Proportionalventil 16 aus parallel geschaltet, was mit den Zusatzanschlüssen 51 angedeutet ist. Jeder Druckmittelzylinder kann ausserdem noch mit einem direkt in die Druckmittelleitung geschalteten Ueberdruckventil 50 versehen sein, so dass beim Uebersteigen eines zulässigen Druckes Druckmittel abgelassen wird und das Werkzeug 1 beim Berühren eines Hindernisses zurückweichen kann.

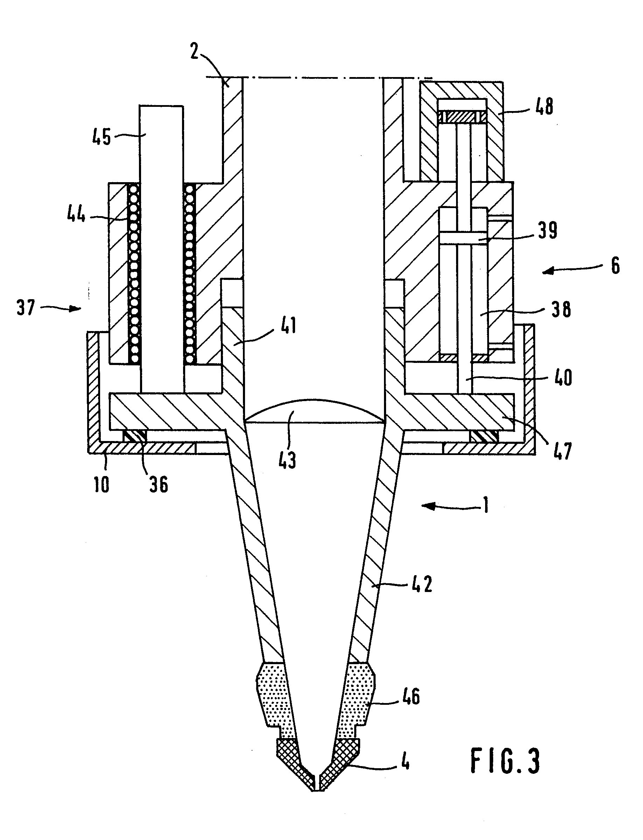

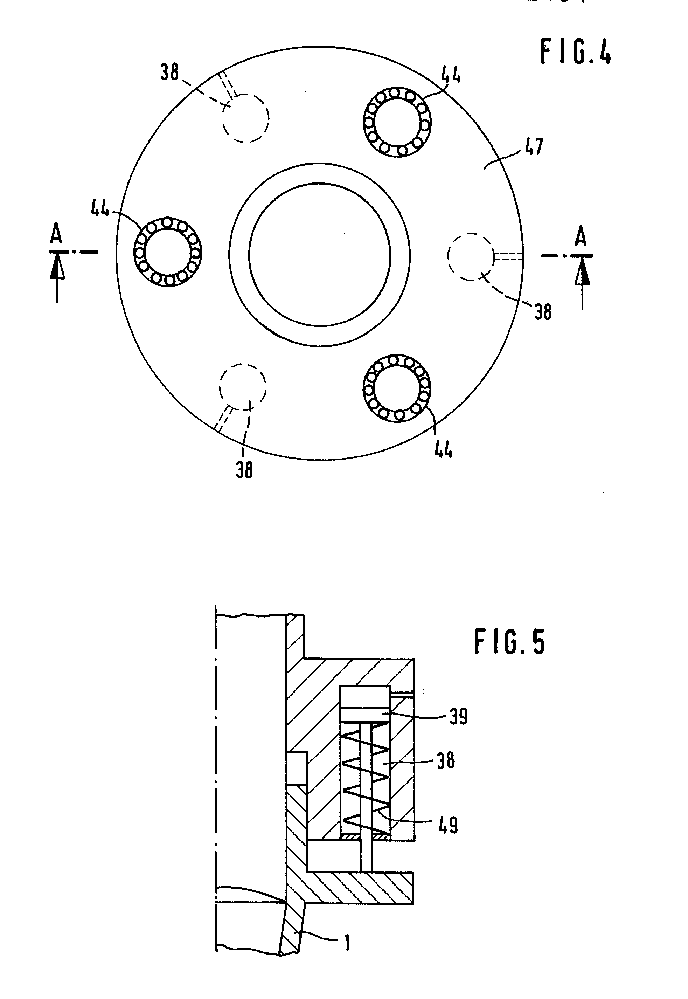

In den Figuren 3 und 4 ist eine erfindungsgemäse Vorrichtung etwas genauer dargestellt. Der Laser-Schneidkopf 1 weist ein Rohr 41 auf, in dem eine Linse 43 zum Fokussieren des Laserstrahls angeordnet ist. Unterhalb der Linse 43 befindet sich die Düse 42, durch welche Prozessgas gegen die Schnittstelle gelenkt wird. Am äussersten Ende der Düse ist der kapazitive Sensor 4 angeordnet und gegenüber den übrigen Bauteilen mit einem Isolationselement 46 isoliert. An der Düse 44 ist ein umlaufender Flansch 47 vorgesehen, an dem die Führungsvorrichtungen 37 bzw. die Stellglieder 6 angreifen.

An der Werkzeughalterung 2, die teilweise ebenfalls rohrförmig ausgebildet ist, sind um das Rohr 41 verteilt und im gleichen Umfangsabstand zueinander drei Druckmittelzylinder 38 angeordnet. Jeweils gleichmässig verteilt zwischen diesen Druckmittelzylindern sind drei Kugelbüchsen 44, in denen die kraftschlüssig mit dem Flansch 47 verbundenen Lagerzapfen 45 verschiebbar sind. Die Kolben 39 sind im Sinne der Funktion gemäss Figur 1 beidseitig mit Druckmittel beaufschlagbar. Die Kolbenstangen 40 sind ebenfalls kraftschlüssig mit dem Flansch 47 verbunden. Die Kolbenstangen 40 setzen sich ausserdem nach oben fort, wo sie mit einem Dämpfungselement 48 verbunden sind. Dieses Dämpfungselement kann beispielsweise ein Gasstossdämpfer sein, mit dem die Bewegung der Kolbenstange 40 gedämpft wird. Dies ist vor allem bei pneumatischen Druckmitteln vorteilhaft.

In Figur 5 ist ein alternatives Ausführungsbeispiel eines Druckmittelzylinders 38 dargestellt, bei dem nur die Oberseite des Kolbens 39 mit Druckmittel beaufschlagbar ist. Die Rückstellung des Kolbens erfolgt jeweils über eine Feder 49, welche das Werkzeug 1 bei ganz entlastetem Kolben in eine obere Endstellung presst. Auch beim einseitig beaufschlagbaren Kolben kann ein Dämpfungselement zweckmässig sein.

Ein alternativer Aufbau eines Stellgliedes 6 ist in Figur 2 genauer dargestellt. Das Aussenrohr 7 ist auf geeignete Weise an der Werkzeughalterung 2 befestigt. Auf der Innenseite ist das Aussenrohr 7 mit einem oberen Abschlussring 18 und mit einem unteren Abschlussring 19 versehen. Im Aussenrohr 7 ist das Innenrohr 8 gelagert. Zusammen mit dem Aussenrohr 7 wird ein Hohlzylinderraum gebildet, der gegen aussen mit den Gleitdichtungen 20 am oberen Abschlussring 18 und am unteren Abschlussring 19 abgedichtet ist. Dieser Hohlzylinderraum wird durch einen kreisringförmigen Abschnitt 12 am Innenrohr 8 in eine obere Ringkammer 13 und in eine untere Ringkammer 14 unterteilt. Der kreisringförmige Abschnitt 12 ist gegenüber dem Aussenrohr 7 ebenfalls mit einer Gleitdichtung 20 abgedichtet. Der kreisringförmige Abschnitt 12 bildet ausserdem die Kolbenflächen 9 eines Arbeitskolbens. In der oberen Ringkammer 13 und in der unteren Ringkammer 14 sind Wälzlager 15 angeordnet, die eine optimale Führung und Lagerung des Innenrohres 8 im Aussenrohr 7 gewährleisten.

Die obere Ringkammer 13 ist mit einem oberen Anschlussstutzen 27 und die untere Ringkammer mit einem unteren Anschlussstutzen 28 versehen. Ueber diese Anschlussstutzen kann Druckmedium, z.B. Hydraulikflüssigkeit je nach Stellung des Proportionalregelventils 16 heraus- bzw. hineingepresst werden. Da das Volumen der beiden Ringkammern 13 und 14 relativ klein ist, lassen sich mit relative geringen Mengen Hydraulikflüssigkeit, grosse Wegstrecken zurücklegen. Entsprechend gross sind denn auch die Verstellfrequenzen des Stellgliedes 6 bei geringer Strömungsgeschwindigkeit in den Zuleitungen.

Das Werkzeug 1 ist teilweise im Innern des Innenrohres 8 untergebracht, was eine optimale Platzausnützung ermöglicht. Das Werkzeug 1 ist von allen Seiten leicht zugänglich und kann mühelos aus dem Innenrohr 8 entfernt werden. Auch die nötigen Anschlüsse für z.B. den Laser, Schneidgas, Schutzgas, Kühlmedium usw. lassen sich relativ leicht unterbringen.

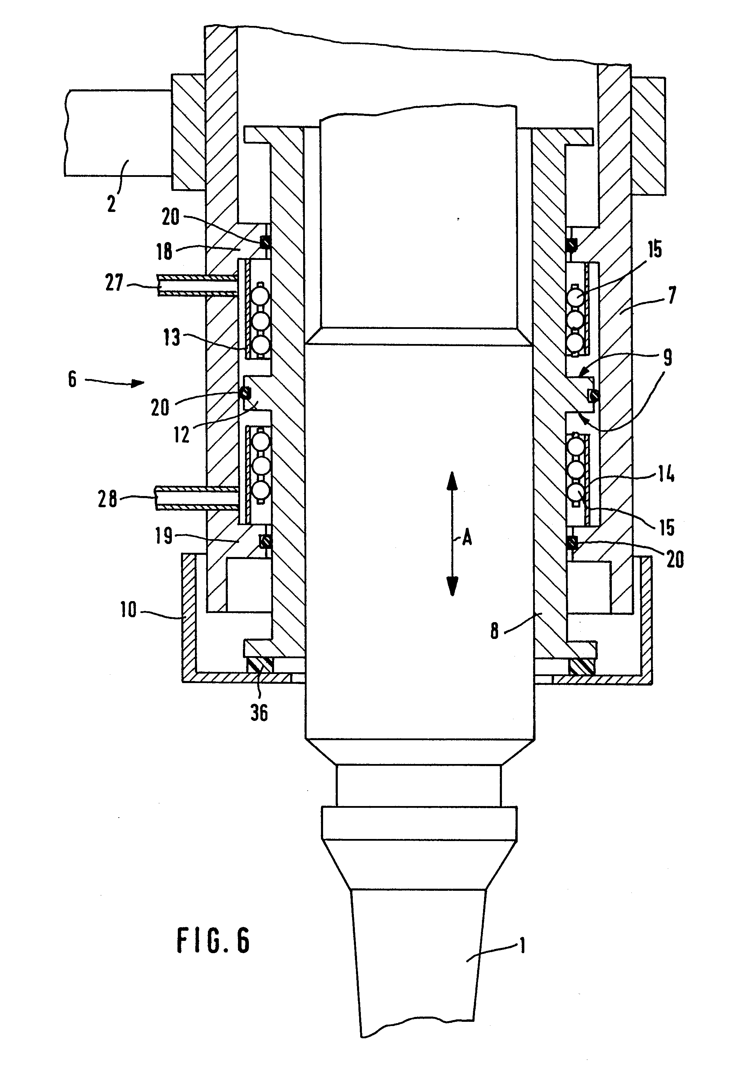

Am Innenrohr 8 ist eine Wegmessvorrichtung 10 angeordnet, mit welcher die Relativposition zwischen Innenrohr 8 und Aussenrohr 7 gemessen werden kann. Die Wegmessvorrichtung 10 kann beispielsweise als glockenartiges Bauteil am unteren Rand des Innenrohres 8 ausgebildet sein, welches das Aussenrohr 7 teilweise überlappt und am Innenrohr 8 über eine Isolation 36 befestigt ist. Je nach Position des Innenrohres wird dabei ein grösserer oder ein kleinerer Abschnitt des Aussenrohres 7 überlappt. Die Wegmessvorrichtung 10 ist in den Figuren 3 und 6 als kapazitiver Messwertaufnehmer ausgebildet, der den stellungsabhängigen Kapazitätswert misst, so dass daraus die Positionssignale für die Relativstellung des Innenrohres 8 über den Positions-Istwertverstärker 26 aus Figur 1 abgeleitet werden können. Diese Positionssignale werden, wie in Figur 1 dargestellt, an den Eingang des Reglers 24/5 gelegt.

Die in den Figuren dargestellte kapazitive Wegmesseinrichtung 10 stellt nur eine von mehreren möglichen Positionsgebern dar. In gleicher Weise können auch potentiometrische, induktive, magnetoelektrische oder hydraulische Positions-Proportionalgeber an dieser Stelle eingesetzt werden, ohne dass sich der grundsätzliche Funktionsablauf verändert. Jedoch besitzt der kapazitive Weggeber den besonderen Vorteil, dass er mit der gleichen Auswerteelektronik wie der kapazitive Abstandssensor 4 betrieben werden kann.

**Patentansprüche**

1. Vorrichtung zum Regeln der Relativlage zwischen einem Werkzeug (1), insbesondere einem Laser-Bearbeitungswerkzeug, und einem Werkstück (3), wobei das Werkzeug an einer Werkzeughalterung (2) über das Werkstück (3) führbar ist, mit einem Sensor (4) zur Ermittlung der Ist-Relativlage und mit einem Regler (5) zur Abgabe von Stellsignalen an ein Stellglied (6) für die Regelung beim Verschieben der Werkzeughalterung, dadurch gekennzeichnet, dass das Werkzeug (1) und die Werkzeughalterung (2) an wenigstens einer Führungsvorrichtung (37) koaxial zueinander verschiebbar gelagert sind, und dass das Stellglied (6) wenigstens einen zwischen dem Werkzeug und der Werkzeughalterung wirksamen Druckmittelzylinder (38) aufweist.

2. Vorrichtung nach Anspruch 1, dadurch gekennzeichnet, dass am Stellglied eine Wegmessvorrichtung (10) angeordnet ist, mit der die Relativverschiebung zwischen Werkzeughalterung (2) und Werkzeug (1) messbar ist, und dass beim Erreichen oder bei Annäherung an den oberen oder unteren maximalen Kolbenhub ein Hauptantrieb (11) zum Nachregeln der Werkzeughalterung (2) aktivierbar ist.

3. Vorrichtung nach Anspruch 1 oder 2, dadurch gekennzeichnet, dass um die Werkzeug-Mittelachse im gleichen Umfangsabstand zueinander wenigstens zwei Druckmittelzylinder (38) angeordnet sind, und dass im Umfangsrichtung zwischen je zwei Druckmittelzylindern eine Führungsvorrichtung (37) angeordnet ist.

4. Vorrichtung nach einem der Ansprüche 1 bis 3, dadurch gekennzeichnet, dass jeder Druckmittelzylinder (38) mit einem beidseitig mit Druckmittel beaufschlagbaren Kolben (12, 38)) versehen ist.

5. Vorrichtung nach einem der Ansprüche 1 bis 3, dadurch gekennzeichnet, dass jeder Druckmittelzylinder (38) mit einem einseitig mit Druckmittel beaufschlagbaren Kolben (39) versehen ist, und dass der Kolben mit einer Feder (49) vorgespannt ist.

6. Vorrichtung nach Anspruch 4 oder 5, dadurch gekennzeichnet, dass die Führungsvorrichtungen Kugelbüchsen (44) sind.

7. Vorrichtung nach einem der Ansprüche 1 bis 6, dadurch gekennzeichnet, dass die Druckmittelzylinder (38) pneumatisch aktivierbar sind.

8. Vorrichtung nach Anspruch 7, dadurch gekennzeichnet, dass jedem Pneumatikzylinder ein Dämpfungselement (48) zum Dämpfen rascher Hubbewegungen zugeordnet ist.

9. Vorrichtung zum Regeln der Relativlage zwischen einem Laser-Bearbeitungswerkzeug (1) und einem Werkstück (3), wobei das Werkzeug (1) an einer Werkzeughalterung (2) über das Werkstück (3) führbar ist und ein Rohr (41) mit einer Linse (43) und eine unter der Linse angeordnete Düse (42) aufweist, sowie mit einem Sensor (4) zur Ermittlung der Ist-Relativlage und mit einem Regler (5) zur Abgabe von Stellsignalen an ein Stellglied (6) für die Regelung beim Verschieben der Werkzeughalterung, dadurch gekennzeichnet, dass das Stellglied (6) wenigstens zwei zwischen dem Werkzeug (1) und der Werkzeughalterung (2) wirksame Druckmittelzylinder (38) aufweist, die um das Rohr (41) bzw. die Düse (42) im gleichen Umfangsabstand zueinander und parallel zur Werkzeugmittelachse angeordnet sind, und dass in Umfangsrichtung zwischen je zwei Druckmittelzylindern eine Führungsvorrichtung (37) zum koaxialen Verschieben von Werkzeug und Werkzeughalterung angeordnet ist.

10. Vorrichtung nach Anspruch 1 oder 2, dadurch gekennzeichnet, dass das Stellglied (6) ein mit der Werkzeughalterung (2) verbundenes Aussenrohr (7) sowie ein darin verschiebbares, mit dem Werkzeug (1) verbundenes Innenrohr (8) aufweist, dass zwischen dem Innenrohr (8) und dem Aussenrohr (7) wenigstens ein Hohlzylinderraum (13, 14) begrenzt ist, wobei eine kreisringförmiger Abschnitt (12) des Innenrohres (8) die Kolbenfläche (9) des Druckmittelzylinders bildet.

11. Vorrichtung nach Anspruch 10, dadurch gekennzeichnet, dass der Hohlzylinderraum durch den kreisringförmigen Abschnitt am Innenrohr (8) in zwei Ringkammern (13, 14) unterteilt ist, welche beide mit Druckmittel beaufschlagbar sind.

12. Vorrichtung nach einem der Ansprüche 10 oder 11, dadurch gekennzeichnet, dass im Hohlzylinderraum wenigstens ein Wälzlager angeordnet ist, an dem das Aussenrohr (7) und das Innenrohr (8) gegenseitig abgestützt und gelagert sind.

13. Vorrichtung nach Anspruch 4 oder 11, dadurch gekennzeichnet, dass die Zylinderkammern auf beiden Kolbenseiten über ein Proportional-Regelventil (16) an eine Druckmittelquelle (17) angeschlossen sind, und dass das Ventil über den Regler (5) ansteuerbar ist.

**FIG.1**

FIG. 2

**FIG.3**

0282454

**FIG.4**

**FIG.5**

FIG.6